Europäisches Patentamt

European Patent Office

Office européen des brevets

(11) Publication number: **0 246 884**
**B1**

(12) EUROPEAN PATENT SPECIFICATION

(45) Date of publication of patent specification: **10.10.90**

(21) Application number: **87304496.0**

(22) Date of filing: **20.05.87**

(51) Int. Cl.⁵: **B 60 K 23/08, B 60 K 17/346**

(54) Power transmission system for a four-wheel drive vehicle.

(30) Priority: **23.05.86 JP 119485/86**

(43) Date of publication of application:
**25.11.87 Bulletin 87/48**

(45) Publication of the grant of the patent:
**10.10.90 Bulletin 90/41**

(84) Designated Contracting States:
**AT CH DE GB LI SE**

(56) References cited:
EP-A-0 143 975
EP-A-0 157 581
EP-A-0 213 958
GB-A-2 058 274
US-A-4 552 241

PATENT ABSTRACTS OF JAPAN, volume 10, no.
265 (M-515) (2321), 10th September 1986; &
JP-A-61 89126 (NISSAN) 07-05-1986 (cat. A)

(73) Proprietor: **FUJI JUKOGYO KABUSHIKI KAISHA**
**7-2 Nishishinjuku 1-chome Shinjuku-ku**
**Tokyo (JP)**

(72) Inventor: **Kobayashi, Toshio**
**5-7-2, Minamiyukigaya**
**Ohta-ku Tokyo (JP)**

(74) Representative: **Kirk, Geoffrey Thomas et al**
**BATCHELLOR, KIRK & CO. 2 Pear Tree Court**
**Farringdon Road**
**London EC1R 0DS (GB)**

Courier Press, Leamington Spa, England.

## Description

The present invention relates to a system for transmitting the power of an engine to the front and the rear wheels of a four wheel drive vehicle having an automatic transmission.

A full time four-wheel drive vehicle having a central differential is well known. In such a vehicle, a differential lock system is provided for preventing front or rear wheels from skidding. As a differential lock system, a dog clutch device operated by a pneumatic actuator is widely used. However, if the actuator is operated when the vehicle is stationary or when cornering, the dog clutch does not engage unless the actuator is operated at the time when corresponding dogs coincide with each other. Further, it frequently happens that the clutch engages after some delay under particular driving conditions.

It is known from US—A—4552241 for a four-wheel drive vehicle to have a centre differential between front wheels and rear wheels and means for restraining or locking the centre differential. The restraining means includes a multiple disc hydraulically operable clutch.

An object of the present invention is to provide such a four-wheel drive system but where the clutch capacity can be quickly varied to control the distribution of the power to the driving wheels.

According to the present invention a power transmission system for a four-wheel drive vehicle having an engine connected to an automatic transmission comprises a differential operatively connected to an output member of the automatic transmission and having first and second side gears, a first drive train connected to transmit rotation of the first side gear to a first drive shaft, a second drive train connected to transmit rotation of the second side gear to a second side shaft, a hydraulically operable clutch provided between the first and second side gears and arranged, when operated to connect the two side gears for locking the differential, and a hydraulic control circuit for controlling the supply of oil to the clutch characterised in that the clutch is controlled by pressure of said oil in dependency on the degree of opening of a throttle valve of the engine.

In one embodiment of the invention the hydraulic control circuit is arranged to apply line pressure of the automatic transmission to the clutch and furthermore the control circuit has a solenoid operated control valve for controlling the supply of the oil.

In order that the invention may be more readily understood it will now be described, by way of example only, with reference to the accompanying drawings in which:—

Figures 1a and 1b show an automatic transmission having a power transmission system according to the present invention;

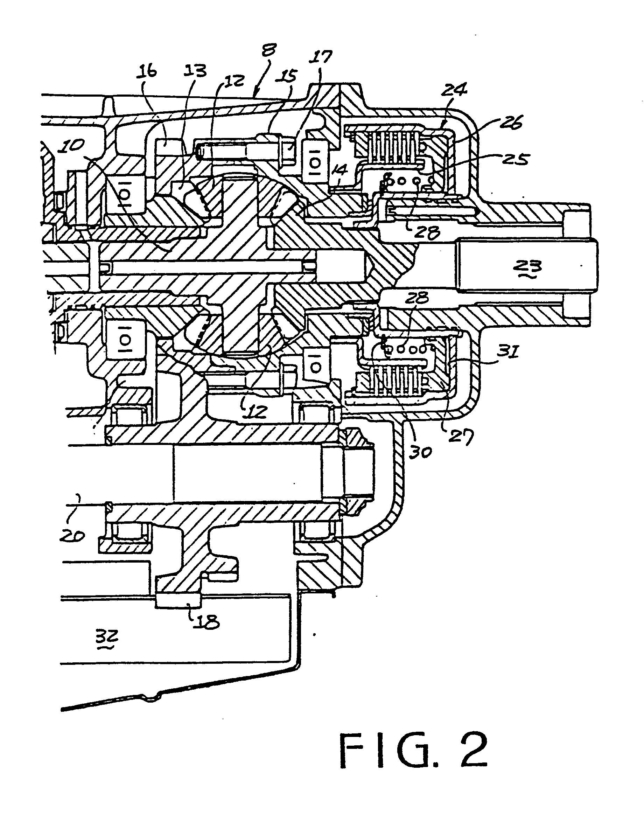

Figure 2 is a view showing a part of Figure 1b to an enlarged scale;

Figures 3a and 3b show a hydraulic control circuit for the automatic transmission and for the power transmission system of the present invention;

Figure 4 is a graph showing line pressures in the hydraulic circuit of Figures 3a and 3b; and

Figure 5 is a graph showing the relationship between clutch capacity and line pressure.

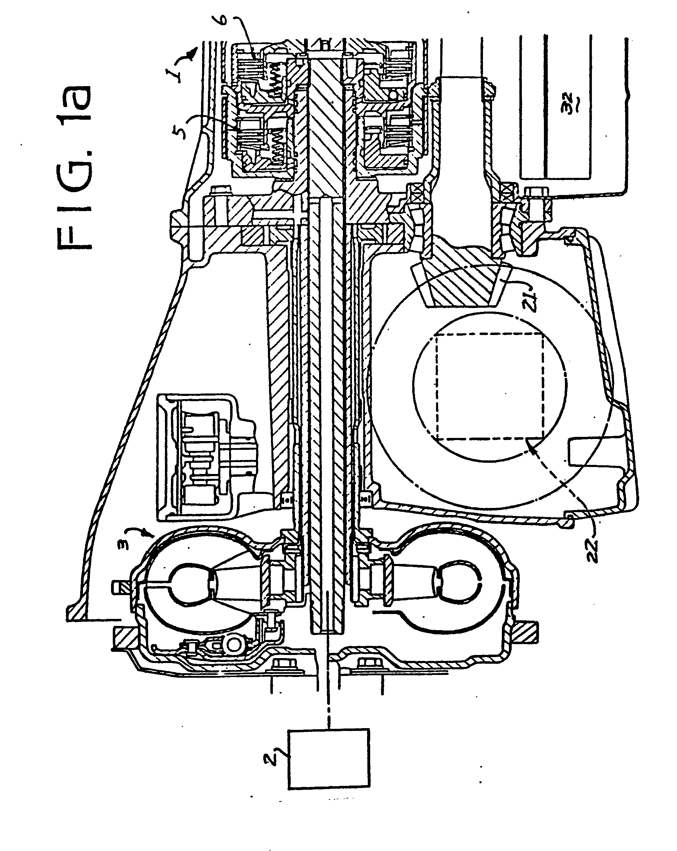

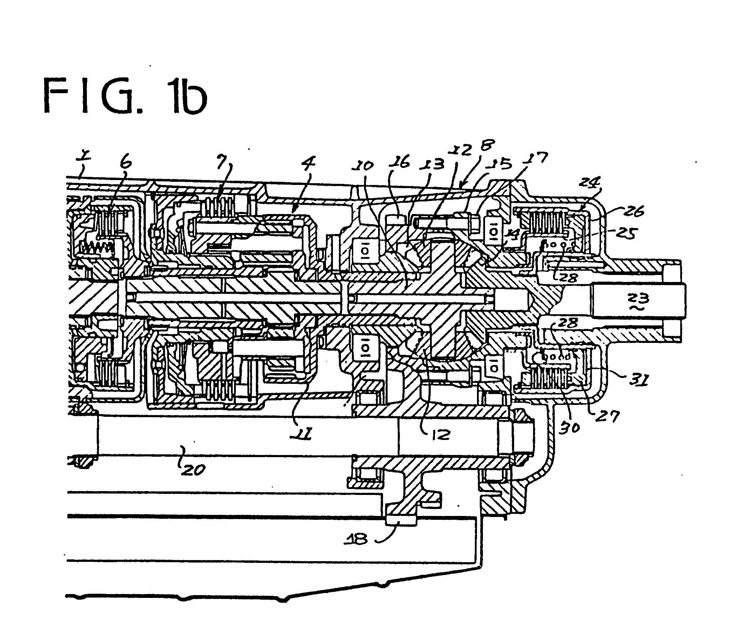

Referring to Figures 1a and 1b, an automatic transmission 1 for a motor vehicle comprises a torque converter 3 for transmitting the power of an engine 2 to the transmission, a planetary gear device 4, a reverse clutch 5, a forward clutch 6, and a low and reverse brake 7, as is well known. A central differential 8 is disposed adjacent a rear portion of the transmission 1.

The central differential 8 comprises a pinion shaft 10 connected to a ring gear 11 of the planetary gear device 4, a pair of pinions 12 mounted on the pinion shaft 10, a pair of side gears 13 and 14 engaged with the pinions 12, and a differential housing 15. A reduction gear 16 integral with the side gear 13 is secured to the housing 15 by a bolt 17 and engages with a reduction driven gear 18. The gear 18 is secured to a front wheel drive 20. The rotation of the front wheel drive shaft 20 is transmitted to the front wheels of the vehicle through a pinion 21 and a front differential 22. The side gear 14 is operatively connected to a rear drive shaft 23. The central differential 8 is operatively connected to a hydraulic multi-disc friction clutch 24 which serves as a differential lock device.

The clutch 24 comprises an inner drum 25 having a plurality of upstanding discs and secured to a boss of the differential housing 15, an outer drum 26 having a plurality of inwardly extending discs and secured to a shaft of the side gear 14 by splines, a piston 27 slidably mounted in the outer drum 26, and a spring 28 provided between the piston 27 and a retainer 30 secured to the outer drum so as to urge the piston in the clutch disengage direction. An oil chamber 31 between the outer drum and the piston is supplied with oil from a hydraulic control system 32 of the automatic transmission, as described hereinafter.

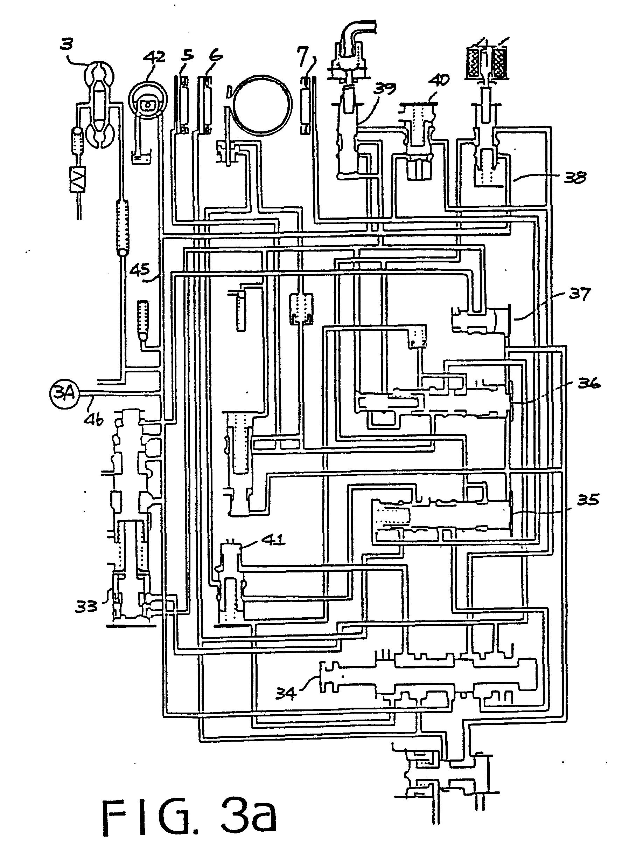

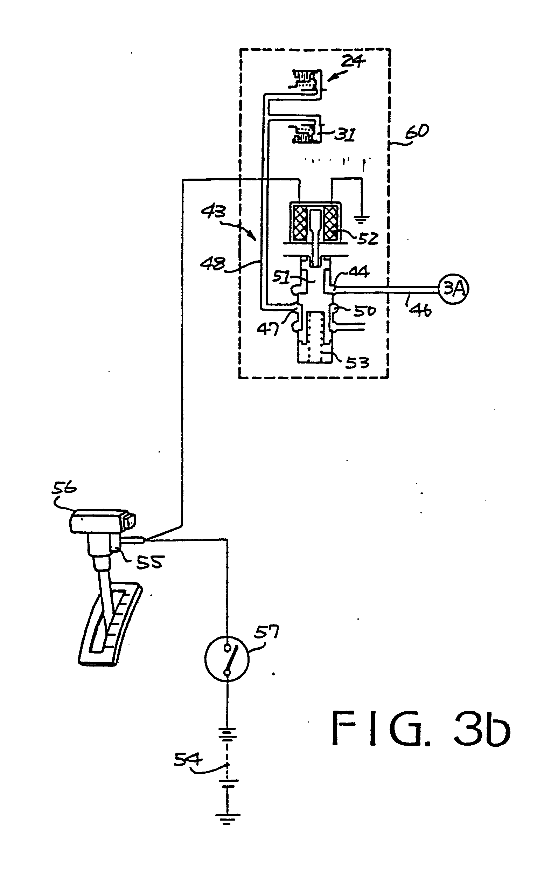

Referring to Figures 3a and 3b, the hydraulic control system has an oil pressure regulator valve 33 for regulating the line pressure of oil supplied from an oil pump 42, a manual valve 34 for selecting the driving ranges, a 1—2 shift valve 35, a 2—3 shift valve 36, a pressure modifier valve 37, a downshift valve 38, a vacuum throttle valve 39, a throttle back-up valve 40, and a second lock valve 41. Since this hydraulic control circuit is well known, more detailed description will not be necessary.

In the system, a hydraulic control circuit 60 is provided for controlling the central differential. The control circuit 60 comprises a solenoid operated control valve 43 having an inlet port 44 communicated with a line pressure passage 45 of the hydraulic control system 32 through a passage 46 so as to be supplied with line pressure, an outlet port 47 communicated with the chamber 31 of the clutch 24 through a passage 48, a drain port 50, a spool 51, a solenoid 52 for shifting the spool 51, and a spring 53 for biasing the spool 51 to a drain position. The solenoid 52 is connected to a battery 54 of the vehicle through a switch 55 attached to a selector lever 56 for operating the manual valve 34 of the automatic transmission and an ignition switch 57.

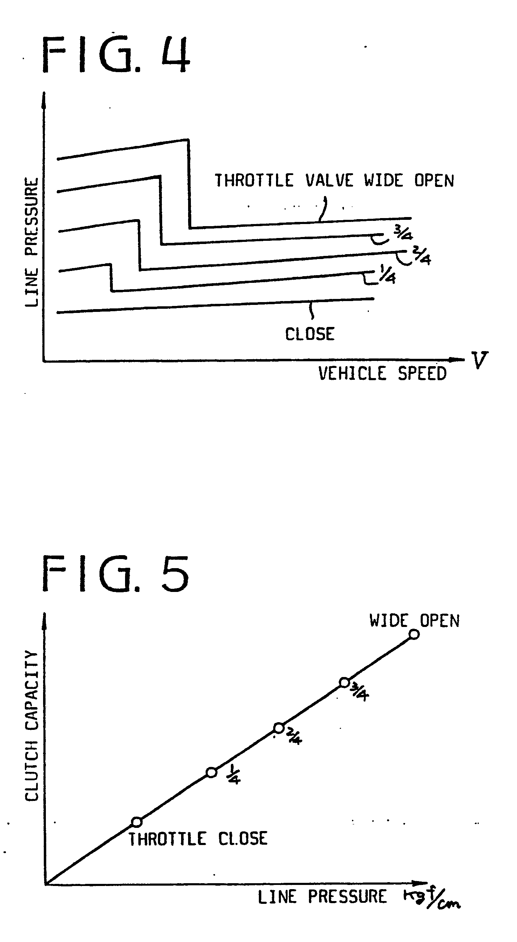

When the switch 55 is opened, the central differential 8 operates to properly distribute the power of the engine to the front and rear wheels in accordance with the driving conditions. When the switch 55 is closed, the central differential 8 is locked with the capacity of the clutch 24 according to the line pressure which, in turn, is dependent on the degree of opening of a throttle valve of the engine, as shown in Figure 4. For example, the clutch 24 is controlled by the line pressure when the degree of throttle opening is greater than one-quarter. At small values of the throttle opening, the line pressure is low, which means that the clutch has a small torque capacity. Accordingly, tight corner braking at low vehicle speed can be prevented. As shown in Figure 5, as the throttle opening increases, the clutch capacity increases, thereby preventing the driving wheels from skidding at high vehicle speed. On the other hand, tight corner braking can be prevented by slipping of the friction clutch at large steering angle and small acceleration.

## Claims

1. A power transmission system for a four-wheel drive vehicle having an engine connected to an automatic transmission, said system comprising a differential (8) operatively connected to an output member of the automatic transmission (1) and having first and second side gears (13, 14); a first drive train (20) connected to transmit rotation of the first side gear to a first drive shaft (21, 22); a second drive train connected to transmit rotation of the second side gear to a second drive shaft (23); a hydraulically operable clutch (24) provided between the first and second side gears and arranged, when operated, to connect the two side gears for locking the differential; and a hydraulic control circuit (32) for controlling the supply of oil to the clutch characterised in that said clutch is controlled by pressure of said oil in dependency on the degree of opening of a throttle valve of the engine.

2. A power transmission system as claimed in claim 1, characterised in that the supply of oil to the clutch is controlled by a solenoid operated valve (43).

3. A power transmission system as claimed in claim 1 characterised in that the oil is supplied by the automatic transmission.

## Patentansprüche

1. Antriebssystem für ein vierradgetriebenes Fahrzeug mit einem mit einem Automatikgetriebe gekoppelten Motor, wobei das System ein Differential (8), das mit einem Ausgangselement des Automatikgetriebes (1) mechanisch verbunden ist und erste und zweite Außenzahnräder (13, 14) besitzt; einen ersten Antriebszug (20), der gekoppelt ist, um die Rotation des ersten Außenzahnrades auf eine erste Antriebswelle (21, 22) zu übertragen; einen zweiten Antriebszug, der gekoppelt ist, um die Rotation des zweiten Außenzahnrades auf eine zweite Antriebswelle (23) zu übertragen; eine hydraulisch betriebene Kupplung (24), die zwischen den ersten und zweiten Außenzahnrädern vorgesehen und angeordnet ist, um im Betrieb beide Außenzahnräder zum Sperren des Differentials miteinander zu koppeln; und einen Hydrauliksteuerkreis (32) zur Steuerung der Zuleitung von Öl zur Kupplung aufweist, dadurch gekennzeichnet, daß die Kupplung durch Druck des Öls in Abhängigkeit von dem Öffnungsgrad eines Drosselventils des Motors gesteuert wird.

2. Antriebssystem nach Anspruch 1, dadurch gekennzeichnet, daß die Zuleitung des Öls zur Kupplung von einem solenoidbetriebenen Ventil (43) gesteuert wird.

3. Antriebssystem nach Anspruch 1, dadurch gekennzeichnet, daß das Öl durch das Automatikgetriebe zugeführt wird.

## Revendications

1. Dispositif de transmission pour un véhicule à quatre roues motrices et qui comprend un moteur relié à une transmission automatique, ce système comprenant un différentiel (8) opérativement relié à un organe de sortie de la transmission automatique (1) et ayant une première et une seconde roues dentées de différentiel (13, 14), un premier train menant (20) relié pour transmettre la rotation à la première roue dentée de différentiel d'un premier arbre moteur (21, 22), un second train menant relié pour transmettre la rotation à la seconde roue dentée de différentiel d'un second arbre moteur (23), un embrayage à commande hydraulique (24) inséré entre la première et la seconde roue dentée de différentiel et arrangé de manière, lorsqu'il est actif, à connecter les deux roues dentées de différentiel afin de verrouiller celui-ci, et un circuit hydraulique de contrôle (32) pour contrôler l'alimentation en huile de l'embrayage caractérisé en ce que ledit embrayage est contrôlé par la pression de cette huile en fonction du degré d'ouverture d'une soupape d'admission du moteur.

2. Dispositif de transmission, selon la revendication 1, caractérisé en ce que l'alimentation d'huile de l'embrayage est contrôlée par une valve (43) commandée par un solénoïde.

3. Dispositif de transmission, selon la revendication 1, caractérisé en ce que l'huile est fournie par la transmission automatique.

FIG. 1a

FIG. 1b

FIG. 2

# FIG. 3a

FIG. 3b

# FIG. 4

# FIG. 5